# EUROPÄISCHE PATENTANMELDUNG

(11) **EP 3 865 733 A1**
(43) Veröffentlichungstag der Anmeldung: **18.08.2021**
(21) Anmeldenummer: 20213416.9
(22) Anmeldetag: 11.12.2020
(51) Int. Cl.: F16H 47/04

(54) **LEISTUNGSVERZWEIGUNGSGETRIEBE, GETRIEBEMODUL UND FAHRZEUG**

(30) Priorität: 16.01.2020 DE 102020200509
(71) Anmelder: Deere & Company, Moline, IL 61265 (US)
(72) Erfinder: BILLICH, MANUEL, 68163 Mannheim (DE)
(74) Vertreter: Dehnhardt, Florian Christopher

(57) **Zusammenfassung**

Es wird ein Leistungsverzweigungsgetriebe (24a - e) für ein Fahrzeug (10), insbesondere ein landwirtschaftliches oder industrielles Arbeitsfahrzeug, mit stufenlos veränderlichem Übersetzungsverhältnis mit wenigstens einer antreibbaren Getriebeeingangswelle (26), einem Leistungsaufteilungsmodul (30), einem Drehzahlvariator (28) mit einer Variatorausgangswelle (49), einem sowohl mit der Getriebeeingangswelle (26) als auch der Variatorausgangswelle (49) wirksam verbundenen Getriebemodul (24) und einer Getriebeausgangswelle (34) vorgeschlagen, wobei das Getriebemodul (32a - e) wenigstens zwei Getriebenebenwellen (52, 53) mit jeweils wenigstens einem Summierungsgetriebe (56a, b, c) zur Zusammenführung der jeweils über die Getriebeeingangswelle (24) und die Variatorausgangswelle (49) eingebrachten Leistung und wenigstens einer Lastschaltstufe (58a - f), über die die Getriebenebenwellen (52, 53) selektiv mit der Getriebeausgangswelle (34) verbindbar sind, aufweist. Darüber hinaus wird ein Getriebemodul (32a -e) für ein Leistungsverzweigungsgetriebe (24) und ein Fahrzeug (10) mit einem Leistungsverzweigungsgetriebe (24a - e) vorgeschlagen.

## Beschreibung

Die vorliegende Erfindung betrifft ein Leistungsverzweigungsgetriebe für ein Fahrzeug, insbesondere ein landwirtschaftliches oder industrielles Arbeitsfahrzeug, mit stufenlos veränderlichem Übersetzungsverhältnis mit wenigstens einer antreibbaren Getriebeeingangswelle, einem Leistungsaufteilungsmodul, einem Drehzahlvariator mit einer Variatorausgangswelle, einem sowohl mit der Getriebeeingangswelle als auch der Variatorausgangswelle wirksam verbundenen Getriebemodul und einer Getriebeausgangswelle, ein Getriebemodul für ein Leistungsverzweigungsgetriebe und ein Fahrzeug, insbesondere ein landwirtschaftliches oder industrielles Arbeitsfahrzeug, mit einem Leistungsverzweigungsgetriebe.

Stufenlose Getriebe sind bekannt. Sie werden beispielsweise an Fahrzeugen, insbesondere an Arbeitsfahrzeugen, wie sie in der Landwirtschaft, Industrie und im Baugewerbe Verwendung finden, eingesetzt. So wird beispielsweise von der ZF Friedrichshafen AG unter der Bezeichnung ECCOM® ein eingangsgekoppeltes, hydrostatisch-mechanisches Leistungsverzweigungsgetriebe gezeigt, das unter anderem einen Hydrostaten bzw. stufenlosen Drehzahlvariator, ein Getriebemodul zur Leistungszusammenführung mit nachgeschaltetem Lastschaltgetriebe und eine Reversiereinheit aufweist. Das Fördervolumen der Hydropumpe des Drehzahlvariators kann durch eine Veränderung der Ansteuerströme zwischen einem positiven und einem negativen Maximalwert verstellt werden. Ein derartiges Getriebe weist über die komplette Getriebespreizung keine Zugkraftunterbrechung sowie keine spürbare Schaltung der Lastschaltgänge auf, da bei Drehzahlgleichheit zwischen zwei Gängen an sogenannten Synchronpunkten geschaltet wird. Die Leistungsdimensionierung des stufenlosen Drehzahlvariators kann in der Regel geringer als die Getriebeeingangsleistung erfolgen. Das eingangs beschriebene Getriebe ist komplex und weist zur Realisierung von vier Lastschaltstufen fünf Schaltelemente (vier Kupplungen und eine Bremse) sowie vier verschaltete Planetenstufen auf.

Die der Erfindung zugrunde liegende Aufgabe wird daher darin gesehen, ein Leistungsverzweigungsgetriebe, ein Getriebemodul und ein Fahrzeug vorzusehen, durch welche die vorgenannten Nachteile überwunden werden.

Die Aufgabe wird erfindungsgemäß durch die Lehre der Patentansprüche 1, 9 bzw. 10 gelöst. Weitere vorteilhafte Ausgestaltungen und Weiterbildungen der Erfindung gehen aus den Unteransprüchen hervor.

Diesbezüglich weist ein Leistungsverzweigungsgetriebe mit stufenlos veränderlichem Übersetzungsverhältnis für ein Fahrzeug wenigsten eine antreibbare Getriebeeingangswelle, ein Leistungsaufteilungsmodul, einen Drehzahlvariator mit einer Variatorausgangswelle, ein sowohl mit der Getriebeeingangswelle als auch der Variatorausgangswelle wirksam verbundenes Getriebemodul und eine Getriebeausgangswelle auf. Das Getriebemodul weist wenigstens zwei Getriebenebenwellen mit jeweils wenigstens einem Summierungsgetriebe zur Zusammenführung der jeweils über die Getriebeeingangswelle und die Variatorausgangswelle eingebrachten Leistung und wenigstens eine Lastschaltstufe, über die die Getriebenebenwellen selektiv mit der Getriebeausgangswelle verbindbar sind, auf. Das Leistungsverzweigungsgetriebe bzw. insbesondere das Getriebemodul kann auf diese Weise vorzugsweise durch einfache und möglichst viele gleichteilige Getriebeelemente realisiert und zudem mit möglichst wenigen Schaltelementen ausgeführt werden. Zudem kann eine kompakte Bauform erreicht werden. Auch können die Vorteile des Stands der Technik erhalten werden. Bei dem Fahrzeug handelt es sich insbesondere um ein landwirtschaftliches oder industrielles Arbeitsfahrzeug, vorzugsweise in der Art eines Ackerschleppers oder Traktors. Es kann sich beim dem Fahrzeug aber auch um eine landwirtschaftliche Erntemaschine, eine selbstfahrende Spritze, ein Baufahrzeug, ein Transport-/Zugfahrzeug oder jedes andere geeignete Fahrzeug, insbesondere in der Art eines Nutzfahrzeug handeln.

Das Leistungsverzweigungsgetriebe kann beispielsweise hydraulisch-mechanisch oder elektro-mechanisch ausgebildet sein. Ein hydraulisch-mechanisches Leistungsverzweigungsgetriebe kann einen Drehzahlvariator mit einer hydraulischen, im Volumen verstellbaren ersten Pumpeneinheit und einer vorzugsweise ein konstantes Volumen aufweisenden, zweiten Pumpeneinheit aufweisen, wobei vorteilhafterweise die erste Pumpeneinheit zwischen einem maximalen negativen Ausschlag und einem maximalen positiven Ausschlag verstellbar sein kann. Im Falle eines elektro-mechanischen Leistungsverzweigungsgetriebes kann der Drehzahlvariator beispielsweise mittels einem oder mehrerer Elektromotoren realisiert werden.

Besonders einfach im Aufbau ist es, wenn zumindest eine der Getriebenebenwelle wenigstens zwei und zumindest die/eine zweite bzw. weitere Getriebenebenwelle wenigstens ein Summierungsgetriebe aufweist, wobei jedem Summierungsgetriebe wenigstens eine Lastschaltstufe zugeordnet ist. Derart lassen sich in einfacher Weise drei Gänge bzw. Übersetzungen realisieren. Das Getriebemodul kann aber auch um weitere Gänge erweitert werden, beispielsweise um die Gesamtgetriebespreizung zu erhöhen oder die Leistungsdimensionierung des stufenlosen Drehzahlvariators zu verringern, indem vorzugsweise abwechselnd auf den Getriebenebenwellen zusätzlich eine weitere Lastschaltstufe hinzugefügt wird.

Vorzugsweise ist wenigstens eine der Getriebenebenwellen in der Art eines Wellenverbunds ausgebildet und/oder weist zwei oder mehrere Nebenwellenabschnitte auf. Auf diese Weise kann der Wellenverbund und/oder die zwei oder mehreren Nebenwellenabschnitte beispielsweise mittels Getriebeelementen wie einem oder mehrere Kupplungselementen, Summierungsgetrieben o.ä., insbesondere selektiv und/oder übersetzt verbunden werden. Beispielsweise kann die wenigstens eine Getriebenebenwelle zur Realisierung von drei Gängen/Übersetzungen dreiteilig ausgebildet bzw. drei Nebenwellenabschnitte aufweisen.

Wenigstens eines, vorzugsweise aber alle Summierungsgetriebe weisen ein Sonnenrad, wenigstens einen Planetensatz mit einem verbindenden Steg und ein Hohlrad auf, wobei vorzugsweise das Sonnenrad wirksam mit der Variatorausgangswelle und/oder das Hohlrad wirksam mit der Getriebeeingangswelle und/oder der Planetensatz bzw. der Steg wirksam mit der Lastschaltstufe verbunden ist. Es ist aber auch denkbar, dass die Eingangswelle über den Steg oder das Sonnerad wirksam mit dem Summierungsgetriebe verbunden sind und der Abtrieb entsprechend über Hohlrad/Sonne oder Steg/Hohlrad erfolgt. Sind wenigstens zwei der Summierungsgetriebe zumindest im Wesentlichen identisch ausgebildet, so lässt sich hierdurch die Anzahl unterschiedlicher Bauteile reduzieren. Es ist aber auch denkbar, mehrere oder alle Summierungsgetriebe zumindest im Wesentlichen identisch auszubilden, um die Komplexität des Systems weiter zu reduzieren.

Um eine wirksame Anbindung zwischen der Getriebeeingangswelle und der Getriebeausgangswelle herzustellen, kann die Getriebeeingangswelle wenigstens ein Nebenwellenantriebsszahnrad aufweisen, das vorzugsweise wirksam mit einem der Summierungsgetriebe verbunden ist und/oder wenigstens eine der Getriebenebenwellen zumindest ein Ausgangszahnrad tragen, das vorzugsweise mit wenigstens einem drehfest auf der Getriebeausgangswelle angeordneten Ausgangszahnrad kämmt.

Ein besonders einfacher Aufbau lässt sich realisieren, wenn die Anbindung zwischen der Getriebeeingangswelle und einem der Summierungsgetriebe der ersten Getriebenebenwelle sowie zwischen der Getriebeeingangswelle und dem Summierungstriebe der zweiten Getriebenebenwelle eine identische Übersetzung und/oder die Anbindung zwischen der Getriebeeingangswelle und den Summierungsgetrieben der ersten Getriebenebenwelle eine unterschiedliche Übersetzung aufweisen.

Sind die Getriebeeingangswelle, die Getriebeausgangswelle und die Getriebenebenwellen in Drachenform angeordnet und/oder sind die Achsabstände zwischen der Getriebeeingangswelle und den Getriebenebenwellen und den Getriebenebenwellen und der Getriebeausgangswelle identisch, so kann eine möglichst kurze Bauform mit einem geringen Abstand zwischen der Getriebeeingangswelle und der Getriebeausgangswelle realisiert werden.

Ein Getriebemodul für ein Leistungsverzweigungsgetriebe weist wenigstens zwei Getriebenebenwellen mit jeweils wenigstens einem Summierungsgetriebe zur Zusammenführung der jeweils über die Getriebeeingangswelle und die Variatorausgangswelle eingebrachten Leistung und wenigstens eine Lastschaltstufe, über die die Getriebenebenwellen selektiv mit der Getriebeausgangswelle verbindbar sind, auf. Ein derartiges Getriebemodul kann die Komplexität des Leistungsverzweigungsgetriebes reduzieren und daher eine Bauraum- und/oder Kostenersparnis ermöglichen. Ein derartiges Getriebemodul kann in einfacher Art und Weise ein bekanntes Getriebemodul eines Leistungsverzweigungsgetriebe ersetzen.

Es ist vorteilhaft, wenn ein Fahrzeug wenigstens ein zuvor beschriebenes Leistungsverzweigungsgetriebe aufweist. Auf diese Weise kann beispielsweise die Komplexität des Fahrzeugs reduziert, Baumraum gespart und/oder anderweitig genutzt und/oder das Fahrzeug kostengünstig hergestellt werden. Bei dem Fahrzeug handelt es sich insbesondere um ein landwirtschaftliches oder industrielles Arbeitsfahrzeug, vorzugsweise in der Art eines Ackerschleppers oder eines Traktors. Es kann sich beim dem Fahrzeug aber auch um eine landwirtschaftliche Erntemaschine, eine selbstfahrende Spritze, ein Baufahrzeug, ein Transport-/Zugfahrzeug oder jedes andere geeignete Fahrzeug, insbesondere Nutzfahrzeug, handeln.

Anhand der Zeichnung, die mehrere Ausführungsbeispiele der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
- Fig. 1: eine Seitenansicht eines landwirtschaftlichen Fahrzeugs mit einem Antrieb und einem Leistungsverzweigungsgetriebe,
- Fig. 2: ein erstes Ausführungsbeispiel eines Leistungsverzweigungsgetriebes,
- Fig. 3: ein zweites Ausführungsbeispiel eines Leistungsverzweigungsgetriebes,
- Fig. 3a: eine vereinfachte Darstellung der Anordnung einer Getriebeeingangswelle, einer Getriebeausgangswelle und zweier Getriebenebenwellen des Leistungsverzweigungsgetriebes aus Figur 3,
- Fig. 4a bis c: ein viertes, fünftes und sechstes Ausführungsbeispiel eines Leistungsverzweigungsgetriebes.

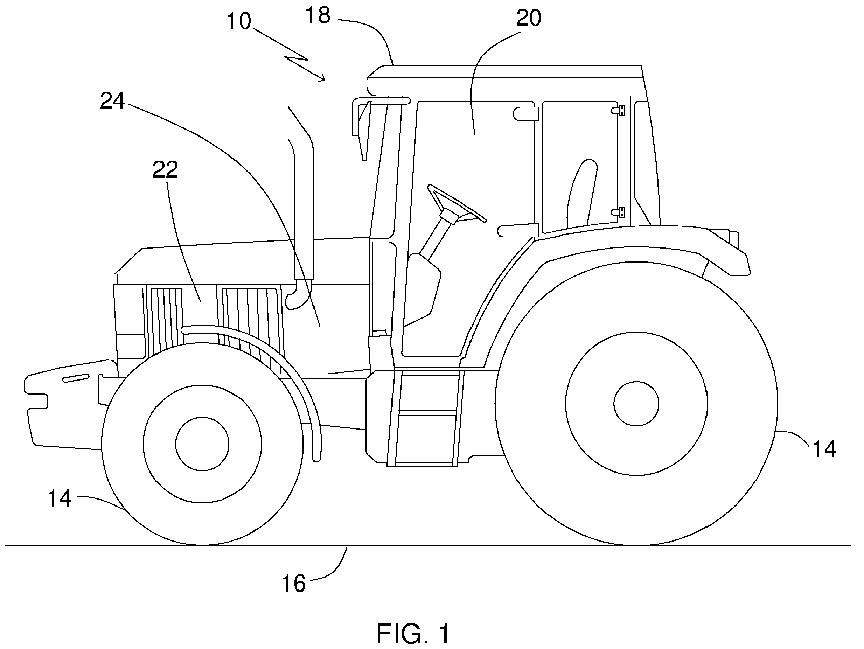

Die Figur 1 der Zeichnung zeigt ein landwirtschaftliches Fahrzeug 10 in der Art eines Ackerschleppers oder Traktors, der sich über vordere und rückwärtige Räder 14 auf dem Untergrund 16 abstützt. In einer Kabine 18 ist ein Bedienerarbeitsplatz 20 angeordnet. Das Fahrzeug 10 verfügt über einen Antrieb 22 und ein Leistungsverzweigungsgetriebe 24, auf das im Folgenden genauer eingegangen wird.

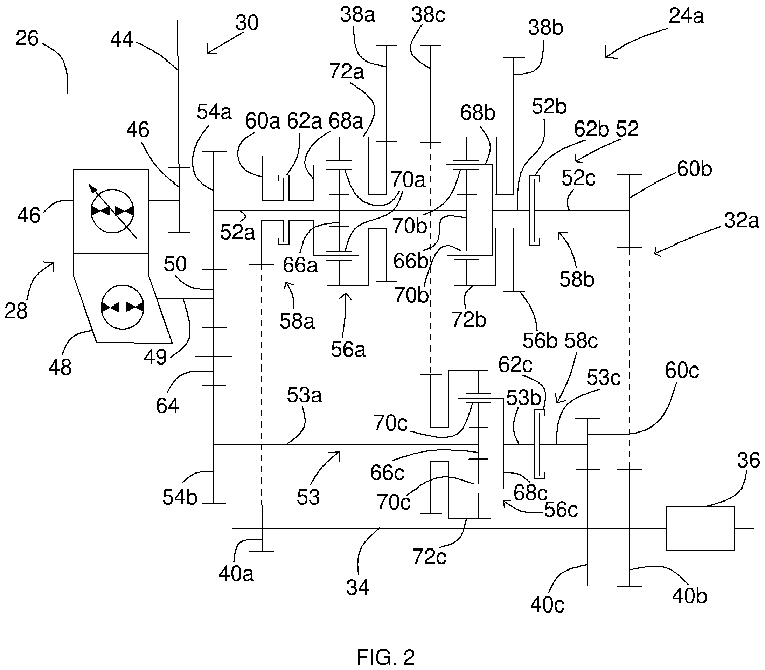

Gemäß dem in Fig. 2 gezeigten ersten Ausführungsbeispiel weist ein Leistungsverzweigungsgetriebe 24a eine Getriebeeingangswelle 26, einen Drehzahlvariator 28, der in dem gezeigten Ausführungsbeispiel in der Art einer Hydrostateinheit ausgebildet ist, ein Leistungsaufteilungsmodul 30, ein Getriebemodul 32a, eine Getriebeausgangswelle 34 und ein nur andeutungsweise dargestelltes Reversiermodul 36 auf. Das mit der Getriebeausgangswelle 34 wirksam verbindbare Reversiermodul 36 ist bekannt und kann alternativ auch auf der Getriebeeingangswelle 26 nach dem Leistungsaufteilungsmodul 30 vorgesehen sein. Es wird darauf hingewiesen, dass der Drehzahlvariator 28 alternativ elektrisch ausgebildet und beispielsweise durch einen oder mehrere bzw. eine Kombination von Elektromotor(en) realisiert sein kann.

Auf der Getriebeeingangswelle 26 sind drehfest ein erstes, ein zweites und ein drittes Nebenwellenantriebszahnrad 38a, b, c, auf der Getriebeausgangswelle 34 ein erstes, ein zweites und ein drittes Abtriebszahnrad 40a b, c, ebenfalls drehfest, vorgesehen.

Der Antrieb 22, der in bekannter Weise beispielsweise als ein Verbrennungsmotor oder in jeder anderen geeigneten Art ausgebildet sein kann, gibt Drehmoment an die Getriebeeingangswelle 26 ab. Diese treibt ein Zahnrad 42 an, welches mit einem Eingangszahnrad 44 einer hydraulischen im Volumen verstellbaren ersten Pumpeneinheit 46 des Drehzahlvariators 28 kämmt. Die erste Pumpeneinheit 46 ist hydraulisch mit einer ein konstantes Volumen aufweisenden zweiten Pumpeneinheit 48 des Drehzahlvariators 28 verbunden. Die zweite Pumpeneinheit 48 des Drehzahlvariators 28 treibt über eine Variatorausgangswelle 49 ein Variatorausgangszahnrad 50 an. Die erste Pumpeneinheit 46 lässt sich zwischen einem maximalen negativen Ausschlag und einem maximalen positiven Ausschlag verstellen.

Das Getriebemodul 32a weist einen ersten und eine zweiten Wellenverbund auf, die im Folgenden zur Vereinfachung als erste und zweite Getriebenebenwelle 52, 53 bezeichnet werden und die jeweils Nebenwellenabschnitte 52a, b, c, bzw. 53a, b, c aufweisen. Auf der ersten Getriebenebenwelle 52 sind gemäß dem ersten Ausführungsbeispiel der Erfindung ein erstes Variatoreingangszahnrad 54a, ein erstes und ein zweites Summierungsgetriebe 56a, 56b mit jeweils zugeordneten ersten und zweiten Lastschaltstufen 58a, 58b und drehbar ein erstes und ein zweites Nebenwellenausgangszahnrad 60a, b, auf der zweiten Getriebenebenwelle 53 ein zweites Variatoreingangszahnrad 54b, ein einzelnes Summierungsgetriebe 56c mit einer zugeordneten Lastschaltstufe 58c und drehbar ein drittes Nebenwellenausgangszahnrad 60c angeordnet. Die Lastschaltstufen 58a, b, c, weisen jeweils ein Kupplungselement 62a, b, c auf, über die die Nebenwellenausgangszahnräder 60a, b, c selektiv mit der jeweiligen Getriebenebenwelle 52, 53 drehfest verbindbar sind. Die Nebenwellenausgangszahnräder 60a, b, c kämmen mit den auf der Getriebeausgangswelle 34 angeordneten Abtriebszahnrädern 40a, b, c.

Das erste Variatoreingangszahnrad 54a kämmt direkt mit dem Variatorausgangszahnrad 50. Zwischen dem zweiten Variatoreingangszahnrad 54b und dem Variatorausgangszahnrad 50 ist ein sowohl mit dem Variatoreingangszahnrad 54b als auch dem Variatorausgangszahnrad 50 kämmendes Zwischenzahnrad 64 vorgesehen, wodurch die ersten Getriebenebenwelle 52 und die zweite Getriebenebenwelle 53 gegensinnig rotieren, wenn sie mittels des Variatorausgangszahnrad 50 in Drehung versetzt werden,

Die drei Summierungsgetriebe 56a, b, c sind vorzugsweise zumindest im Wesentlichen identisch ausgebildet, wobei die Summierungsgetriebe 56a, b, c gemäß dem gezeigten Ausführungsbeispiel jeweils in bekannter Art und Weise ein Sonnenrad 66a, b, c, mehrere über einen drehenden Steg 68a, b, c verbundene Planetenräder 70a, b, c und ein Hohlrad 72a, b, c aufweisen.

Der erste Nebenwellenabschnitt 52a der ersten Getriebenebenwelle 52 verbindet dabei das erste Variatoreingangszahnrad 54a mit dem ersten Sonnenrad 66a des ersten Summierungsgetriebes 56a und dem zweiten Sonnenrad 66b des zweiten Summierungsgetriebes 56b, der zweite Nebenwellenabschnitt 52b den Steg 68b des zweiten Summierungsgetriebes 56b mit dem zweiten Kupplungselement 62b und der dritte Nebenwellenabschnitt 52c das Kupplungselement 62b mit dem zweiten Nebenwellenausgangszahnrad 60b. Der erste Nebenwellenabschnitt 53a der Getriebenebenwelle 53 verbindet das zweite Variatoreingangszahnrad 54b mit dem Sonnenrad 66c des dritten Summierungsgetriebes 56c, der zweite Nebenwellenabschnitt 53b, den Steg 68c mit dem dritten Kupplungselement 58c und der dritte Nebenwellenabschnitt 53c das Kupplungselement 58c mit dem dritten Nebenwellenausgangszahnrad 60c.

Das erste, zweite und dritte Nebenwellenantriebszahnrad 38a, b, c der Getriebeeingangswelle 26 ist jeweils mit dem entsprechenden Hohlrad 72a, b, c des jeweiligen Summierungsgetriebes 56a, b, c wirksam verbunden, wobei die Anbindung zwischen der Getriebeeingangswelle 26 und den Hohlrädern 72a, c bezüglich der Übersetzung vorzugsweise identisch vorgesehen ist. Die drehzahlübersetzungsfeste Anbindung zwischen der Getriebeeingangswelle 26 und dem zweiten Hohlrad 72b weist vorzugsweise eine größere Übersetzung als die Anbindung zwischen der ersten Getriebeeingangswelle 26 und dem ersten und dem dritten Hohlrad 72a,c auf, um den Drehzahlvariator 28 möglichst gleichmäßig über den kompletten
Getriebespreizungsbereich ausnutzen zu können.

Die drehzahlübersetzungsfeste Verbindung zwischen den Getriebenebenwellen 52, 53 und der Getriebeausgangswelle 34 erfolgt über die Stege 68a, b, c, die über die jeweilige Kupplungselemente 62a, b, c mit den Nebenwellenausgangszahnräder 60a, b, c verbindbar sind. Es ist dabei vorgesehen, dass immer nur eines der Kupplungselemente 62a, b, c geschlossen sein darf. Die Anzahl der Kupplungselemente 62a, b, c entspricht dabei der Anzahl an lastschaltbaren Getriebeübersetzungen des Getriebemoduls 32. Gemäß dem in der Figur 2 gezeigten ersten Ausführungsbeispiel sind dies drei
Getriebeübersetzungen.

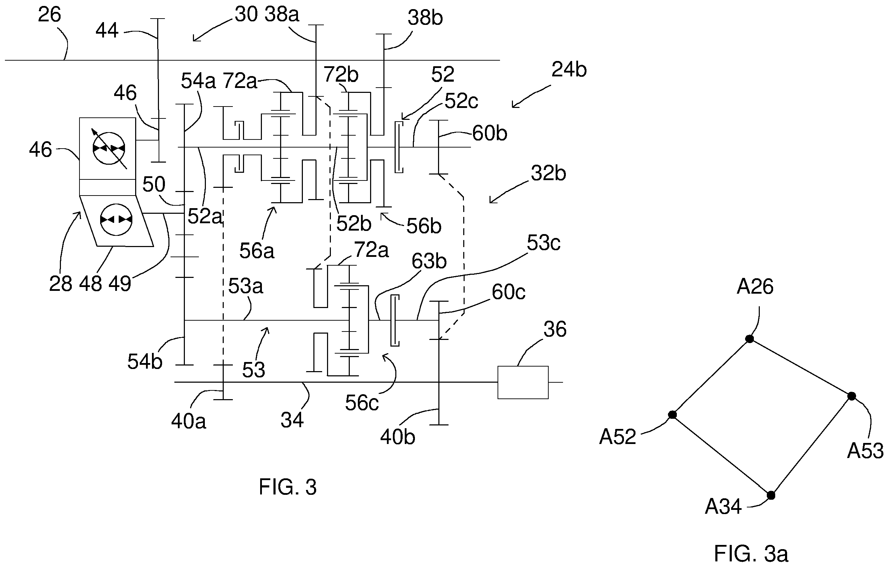

Das in der Fig. 3 gezeigte Ausführungsbeispiel entspricht in seiner Funktionsweise dem Ausführungsbeispiel gemäß der Fig. 2. Allerdings sind die Getriebeeingangswelle 26, die Getriebeausgangswelle 34 und die Getriebenebenwellen 52, 53 in Drachenform angeordnet, d.h. die Getriebeeingangswelle 26 bzw. deren Achse A26 und die Getriebeausgangswelle 34 bzw. deren Achse A34 sind zu den Getriebenebenwellen 52, 53 bzw. deren Achsen A52, A53 jeweils gleich beabstandet, wie dies schematisch in Figur 3a dargestellt wird. Durch diese Drachenanordnung kann bei Vorsehen einer gleichen Übersetzung und bei gleichem Abstand der Getriebenebenwellen 52, 53 bezüglich der Getriebeeingangswelle 26 das erste Nebenwellenantriebszahnrad 38a sowohl mit dem ersten Summierungsgetriebe 56a der ersten Getriebenebenwelle 52 und dem dritten Summierungsgetriebe 56c der zweiten Getriebenebenwelle 53 wirksam verbunden werden. Ebenso kann bei entsprechend gleicher Übersetzung und bei gleichem Abstand der Getriebenebenwellen 52, 53 bezüglich der Getriebeausgangswelle 34 sowohl eines der Nebenwellenausgangszahnräder 60b der ersten Getriebenebenwelle 52 und das Nebenwellenausgangszahnrad 60c der zweiten Getriebewelle 53 mit einem gemeinsamen Abtriebszahnrad 40b der Getriebeausgangswelle 34 kämmen.

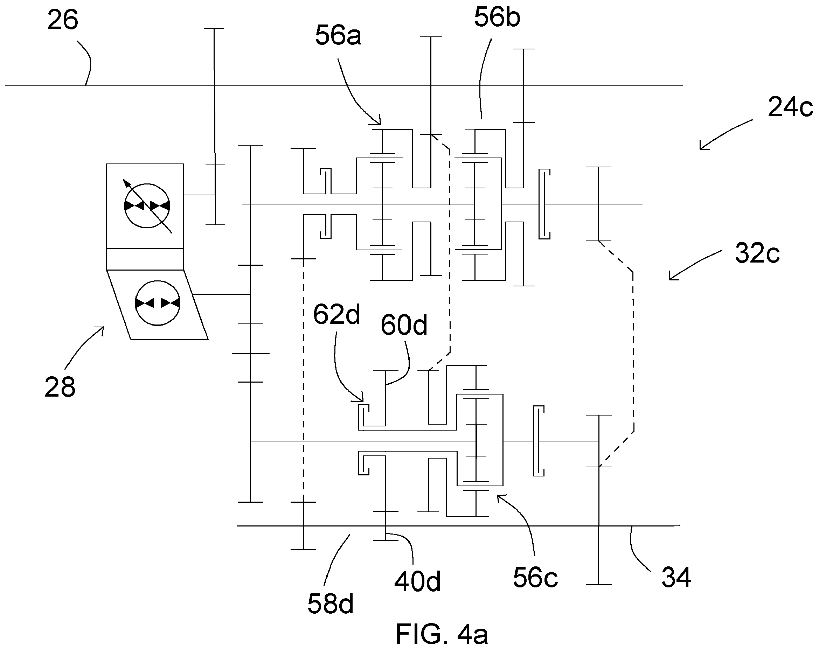

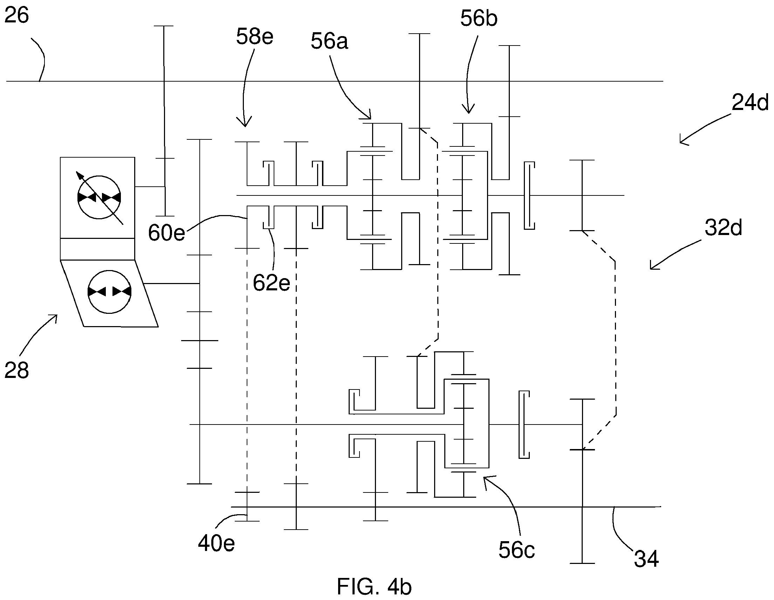

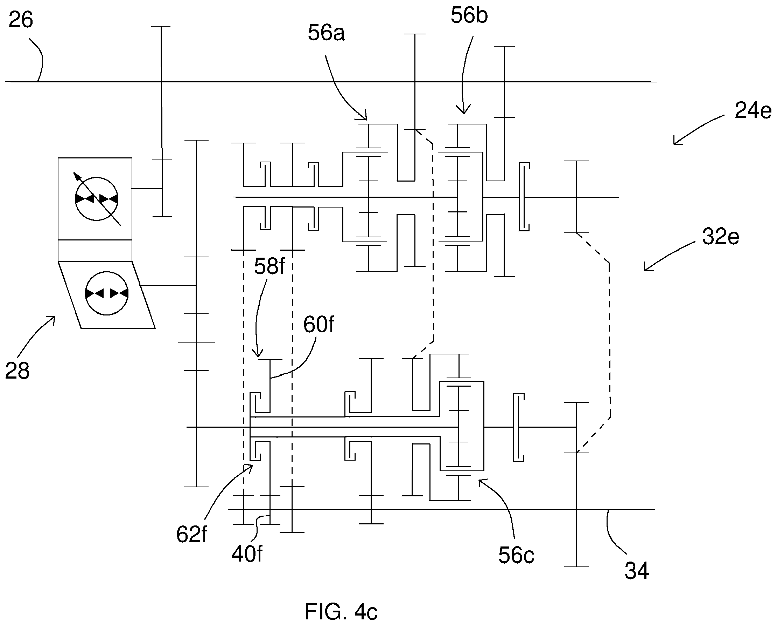

Es wird nun auch auf die Figuren 4a, b und c Bezug genommen, in denen weitere Ausführungsbeispiele der Erfindung gezeigt werden. In ihrer Grundstruktur entsprechend alle drei Ausführungsbeispiele, dem in den Fig. 3 und 3a dargestellten Leistungsverzweigungsgetriebe 24b, weshalb in den Figuren nur in der Beschreibung genannte Bauteile mit Referenzzeichen versehen werden. Bei den beiden zuvor gezeigten Ausführungsformen weist das Getriebemodul 32a, b drei lastschaltbare Gänge/Übersetzungen auf. Gemäß den Ausführungsbeispielen 3 - 5 sind jeweils eine, zwei bzw. drei zusätzliche Lastschaltstufen 58 d, e, f vorgesehen. Jede der Lastschaltstufen 58d, e, f weist ein zusätzliche Kupplungselement 62d, e, f auf, das jeweils eines der Summierungsgetriebe 56 a,b,c mit einem weiteren Nebenwellenausgangszahnrad 60d, e, f, das mit einem zusätzlichen auf der Abtriebswelle 34 drehfest vorgesehenen Abtriebszahnrad 40d, e, f kämmt, selektiv verbinden kann.

Indem abwechselnd auf den Getriebenebenwellen 52, 53 zusätzlich eine über ein insbesondere lastschaltbares Kupplungselement 62d, e, f koppelbare Getriebestufe hinzugefügt wird, können in einfacher Weise weitere Gänge vorgesehen werden, wodurch die Gesamtgetriebespreizung erhöht und/oder die Leistungsdimensionierung des stufenlosen Drehzahlvariators 28 verringert wird. Auch wenn die in den Figuren 4a - c gezeigten Leistungsverzweigungsgetriebe 24c, d, e grundsätzlich gemäß dem Ausführungsbeispiel gemäß Figur 3 ausgebildet sind, ist es alternativ denkbar, die gezeigten Leistungsverzweigungsgetriebe auch entsprechend der Darstellung und entsprechenden Beschreibung gemäß Figur 2 auszubilden.

## Patentansprüche

1. Leistungsverzweigungsgetriebe (24a - e) für ein Fahrzeug (10), insbesondere ein landwirtschaftliches oder industrielles Arbeitsfahrzeug, mit stufenlos veränderlichem Übersetzungsverhältnis mit wenigstens einer antreibbaren Getriebeeingangswelle (26), einem Leistungsaufteilungsmodul (30), einem Drehzahlvariator (28) mit einer Variatorausgangswelle (49), einem sowohl mit der Getriebeeingangswelle (26) als auch der Variatorausgangswelle (49) wirksam verbundenen Getriebemodul (32a - e) und einer Getriebeausgangswelle (34), **dadurch gekennzeichnet, dass** das Getriebemodul (32a - e) wenigstens zwei Getriebenebenwellen (52, 53) mit jeweils wenigstens einem Summierungsgetriebe (56a, b, c) zur Zusammenführung der jeweils über die Getriebeeingangswelle (26) und die Variatorausgangswelle (49) eingebrachten Leistung und wenigstens einer Lastschaltstufe (58a - f), über die die Getriebenebenwellen (52, 53) selektiv mit der Getriebeausgangswelle (34) verbindbar sind, aufweist.

2. Leistungsverzweigungsgetriebe nach Anspruch 1, **dadurch gekennzeichnet, dass** das Leistungsverzweigungsgetriebe hydraulisch-mechanisch bzw. elektro-mechanisch ausgebildet ist.

3. Leistungsverzweigungsgetriebe nach einem der vorherigen Ansprüche, **dadurch gekennzeichnet, dass** zumindest eine der Getriebenebenwelle (52) wenigstens zwei und zumindest die/eine zweite bzw. weitere Getriebenebenwelle (53) wenigstens ein Summierungsgetriebe (56a - c) aufweist, wobei jedem Summierungsgetriebe (56a - c) vorzugsweise wenigstens eine Lastschaltstufe (58 a- f) zugeordnet ist

4. Leistungsverzweigungsgetriebe nach einem der vorherigen Ansprüche, **dadurch gekennzeichnet**, **dadurch gekennzeichnet, dass** wenigstens eine der Getriebenebenwelle (52, 53) in der Art eines Wellenverbund ausgebildet ist und/oder zwei oder mehrere Nebenwellenabschnitte (52a - c, 53a - c) aufweist.

5. Leistungsverzweigungsgetriebe nach einem der vorherigen Ansprüche, **dadurch gekennzeichnet, dass** wenigstens eines der Summierungsgetriebe (56a - c) ein Sonnenrad (66a - c), wenigstens einen Planetensatz (70a - c) mit einem verbindenden Steg (68a - c) und ein Hohlrad (72a - c) aufweist, wobei vorzugsweise das Sonnenrad (66a - c) wirksam mit der Variatorausgangswelle (49) und/oder das Hohlrad (72a - c) wirksam mit der Getriebeeingangswelle und/oder der Planetensatz (70a - c) bzw. der Steg (68a - c) wirksam mit der Lastschaltstufe (58a - f) verbunden ist, wobei vorzugsweise wenigstens zwei der Summierungsgetriebe (56a - c) zumindest im Wesentlichen identisch ausgebildet sind.

6. Leistungsverzweigungsgetriebe nach einem der vorherigen Ansprüche, **dadurch gekennzeichnet, dass** die Getriebeeingangswelle (26) wenigstens ein Nebenwellenantriebszahnrad (38a - c) aufweist, dass vorzugsweise wirksam mit einem der Summierungsgetriebe (56a - c) verbunden ist, und/oder dass wenigstens eine der Getriebenebenwellen (52, 53) zumindest ein Ausgangszahnrad (60a - f) trägt, das vorzugsweise mit wenigstens einem drehfest auf der Getriebeausgangswelle (34) angeordneten Ausgangszahnrad (40a - f) kämmt.

7. Leistungsverzweigungsgetriebe nach einem der vorherigen Ansprüche, **dadurch gekennzeichnet, dass** die Anbindung zwischen der Getriebeeingangswelle (26) und einem der Summierungsgetriebe (56a, b) der ersten Getriebenebenwelle (52) sowie zwischen der Getriebeeingangswelle (26) und dem Summierungstriebe (56c) der zweiten Getriebenebenwelle (53) eine identische Übersetzung aufweisen und/oder die Anbindung zwischen der Getriebeeingangswelle (26) und den Summierungsgetrieben (56a, b) der ersten Getriebenebenwelle (52) eine unterschiedliche Übersetzung aufweisen.

8. Leistungsverzweigungsgetriebe nach einem der vorherigen Ansprüche, **dadurch gekennzeichnet, dass** die Getriebeeingangswelle (26), die Getriebeausgangswelle (34) und die Getriebenebenwellen (52, 53) in Drachenform angeordnet sind und/oder die Abstände zwischen der Getriebeeingangswelle (26) und den Getriebenebenwellen (52, 53) und den Getriebenebenwellen (52, 53) und der Getriebeausgangswelle (34) identisch sind.

9. Getriebemodul (32a - e) für ein Leistungsverzweigungsgetriebe (24a - e) nach einem der vorherigen Ansprüche, **gekennzeichnet durch** wenigstens zwei Getriebenebenwellen (52, 53) mit jeweils wenigstens einem Summierungsgetriebe (56a - c) zur Zusammenführung der jeweils über die Getriebeeingangswelle (26) und die Variatorausgangswelle (49) eingebrachten Leistung und wenigstens einer Lastschaltstufe (58a - f), über die die Getriebenebenwellen (52, 53) selektiv mit der Getriebeausgangswelle (34) verbindbar sind.

10. Fahrzeug (10), insbesondere ein landwirtschaftliches oder industrielles Arbeitsfahrzeug, mit einem Leistungsverzweigungsgetriebe (24a - e) nach einem der Ansprüche 1 - 8.
